(19) Europäisches Patentamt
European Patent Office
Office européen des brevets

(11) **EP 2 455 147 A1**

(12) **EUROPEAN PATENT APPLICATION**
published in accordance with Art. 153(4) EPC

(43) Date of publication:
**23.05.2012 Bulletin 2012/21**

(51) Int Cl.:
*A63F 13/00* (2006.01)  *A63F 13/02* (2006.01)
*G06F 3/033* (2006.01)

(21) Application number: **10799662.1**

(22) Date of filing: **10.03.2010**

(86) International application number:
**PCT/JP2010/053998**

(87) International publication number:
**WO 2011/007600 (20.01.2011 Gazette 2011/03)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.07.2009 JP 2009169062**

(71) Applicant: **Kabushiki Kaisha Sega
Tokyo 144-8531 (JP)**

(72) Inventors:
• **SUGIYAMA, Chiaki
  Tokyo 144-8531 (JP)**
• **TOKUHARA, Jun
  Tokyo 144-8531 (JP)**

(74) Representative: **Thacker, Darran Ainsley et al
Serjeants
25 The Crescent
King Street
Leicester, LE1 6RX (GB)**

(54) **GAME APPARATUS AND COMPUTER PROGRAM**

(57)     A first value is calculated, based on a difference of a first load data based on an output of a first load sensor 82a provided at a right front part of a supporter 78 for supporting a player and a second load data based on an output of a second load sensor 82b provided at a right rear part of the supporter; a second value is calculated, based on a difference of a third load data based on an output of a third load sensor 82c provided at a left front part of the supporter and a fourth load data based on an output of a fourth load sensor 82d provided at a left rear part of the supporter; and an action of an object to be displayed on a display screen is determined based on the calculated first value and the second value.

FIG. 2A

# FIG. 2B

**Description**

<u>TECHNICAL FIELD</u>

The present invention relates to a game device and a computer program, more specifically, a game device using a controller, and a computer program.

<u>BACKGROUND ART</u>

Recently, a technique that a player gets on a controller with a plurality of load sensors provided on, and changing loading modes on the controller to thereby make input operations of the game (Patent Reference 1).
The background art of the invention of the present application is as follows.

<u>PRIOR ART REFERENCES</u>

<u>PATENT REFERENCES</u>

Patent Reference 1: Japanese Patent Application Unexamined Publication No. 2008-264195
Patent Reference 2: Japanese Patent Application Unexamined Publication No. 2008-119211

<u>SUMMARY OF THE INVENTION</u>

<u>PROBLEMS TO BE SOLVED BY THE INVENTION</u>

However, by using such controller, realistic operations cannot be always realized.
An object of the present invention is to provide a game device which can realize realistic operations, and a computer program.

<u>MEANS FOR SOLVING THE PROBLEMS</u>

According to one aspect of the present invention, the present invention provides a computer program for operating a computer as a game device using a controller including a supporter for supporting a player; a first load sensor provided at a right front part of the supporter, for detecting a load from supporter; a second load sensor provided at a right rear part of the supporter, for detecting a load from the supporter, the third load sensor provided at a left front part of the supporter, for detecting a load from the supporter, and the fourth load sensor provided at a left rear part of the supporter, for detecting a load from the supporter, said computer being operated as an action determination means which calculates a first value, based on a difference of a first load data based on an output of the first load sensor and the second load data based on an output of the second load sensor, calculates a second value based on a difference between a third load data based on an output of the third load sensor and a fourth load data based on an output of the fourth load sensor, and determines an action of an object to be displayed on a display screen, based on the first value and the second value.
According to the other aspect of the present invention, the present invention provides a game device comprising a controller including a supporter for supporting a player, and a first load sensor provided at a right front part of the supporter, for detecting a load from the supporter, a second load sensor provided at a right rear part of the supporter, for detecting a load from the supporter, a third load sensor provided at a front left part of the supporter, for detecting a load from the supporter and a fourth load sensor provided at a left rear part of the supporter, for detecting a load from the supporter, the game device comprising an action determination means which calculates a first value based on a difference between the first load data based on an output of the first load sensor and an output of the second load sensor, calculates a second value, based on a difference between the third load data based on an output of the third load sensor and a fourth load data based on an output of the fourth load sensor, and determines an action of an object to be displayed on a display screen, based on the first value and the second value.

<u>EFFECT OF THE INVENTION</u>

According to the present invention, a first value is calculated, based on a difference between a first load data based on an output of a first load sensor provided at a right front part of the supporter for a player to be supported on, and a second load data based on an output of a second load sensor provided at a right rear part of the supporter. A second value is calculated, based on a difference between a third load data based on an output of a third load sensor provided at the left front part of the supporter and a fourth load data based on an output of a fourth load sensor provided at a left rear part. Based on the first value and the second value, an action of an object displayed on a display screen is determined. Thus, according to the present invention, the object can be cause to make rotation, etc., which makes it possible to realistically enjoy the game.

BRIEF DESCRIPTION OF THE DRAWINGS

[FIG. 1] FIG. 1 is an appearance view of the game device according to one embodiment of the present invention.
[FIG. 2] FIG. 2 is a top view and a bottom view of a controller used in the embodiment of the present invention.
[FIG. 3] FIG. 3 is a block diagram of the game device according to the embodiment of the present invention.
[FIG. 4] FIG. 4 is a perspective view illustrating a player getting on the first controller.
[FIG. 5] FIG. 5 is a view illustrating an example of the display screen of the game device according to the embodiment of the present invention.
[FIG. 6] FIG. 6 is a view of the respective memories provided in the system memory.
[FIG. 7] FIG. 7 is a view illustrating a relationship between the local coordinate system and the object.
[FIG. 8] FIG. 8 is the flow chart of the processing of determination of an action of the object.
[FIG. 9] FIG. 9 is views illustrating the operations of the first controller with the legs of a player.
[FIG. 10] FIG. 10 is views illustrating the case that a player applies the weight to the tiptoe of the right leg and the tiptoe of the left leg.
[FIG. 11] FIG. 11 is views illustrating the case that the player applies the weight to the heel of the right leg and the heel of the left leg.
[FIG. 12] FIG. 12 is views illustrating the case that the player applies the weight to the heel of the right leg and the tiptoe of the left leg.
[FIG. 13] FIG. 13 is views illustrating the case that the player applies the weight to the heel of the left leg and the tiptoe of the right leg.
[FIG. 14] FIG. 14 is views illustrating a specific example (Part 1) of the actions of the object.
[FIG. 15] FIG. 15 is views illustrating a specific example (Part 2) of the actions of the object.
[FIG. 16] FIG. 16 is views illustrating a specific example (Part 3) of the actions of the object.
[FIG. 17] FIG. 17 is views illustrating a specific example (Part 4) of the actions of the object.
[FIG. 18] FIG. 18 is views illustrating a specific example (Part 4) of the actions of the object.

MODE FOR CARRYING OUT THE INVENTION

[An Embodiment]

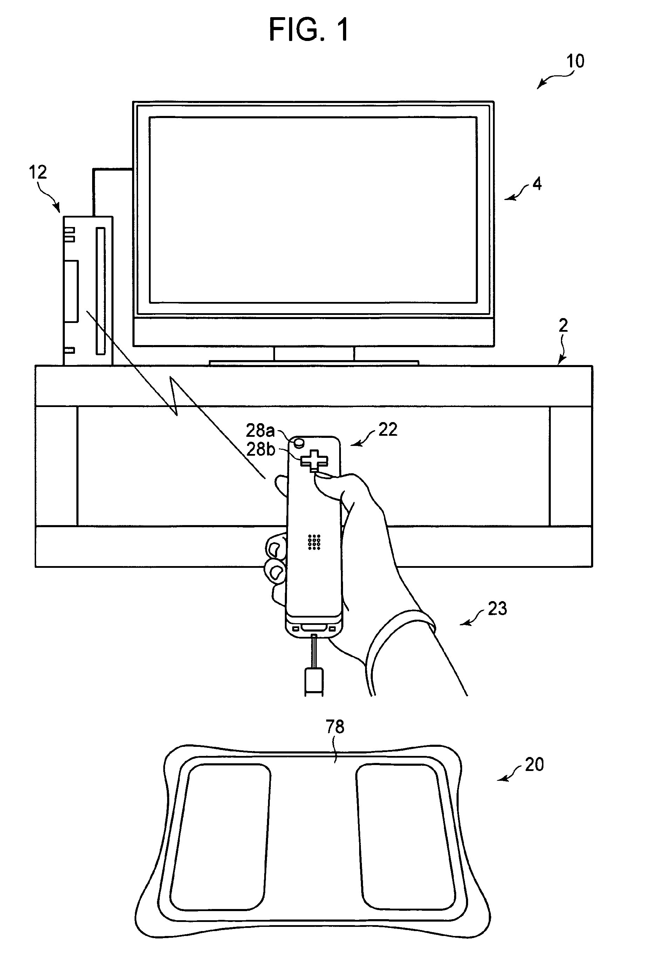

The game device and a computer program according to an embodiment of the present invention will be described with reference to FIGs. 1 to 17.

(Appearance of the Game Device)

First, the appearance of the game device 10 according to the present embodiment will be described. FIG. 1 is an appearance view of the game device according to the present embodiment.
The game device 10 according to the present embodiment is used, connected to a TV monitor (a display, display means) 4 placed on a TV rack 2.
The game device 10 includes a first controller 20 to be operated by a player, and a second controller 22 to be operated by the player.
The game device body 12 and the TV monitor 4 are connected to each other by a cable. The game device body 12 and the first controller 20 can communicate with each other by wireless. The game device body 12 and the second controller 22 can communicate with each other by wireless.

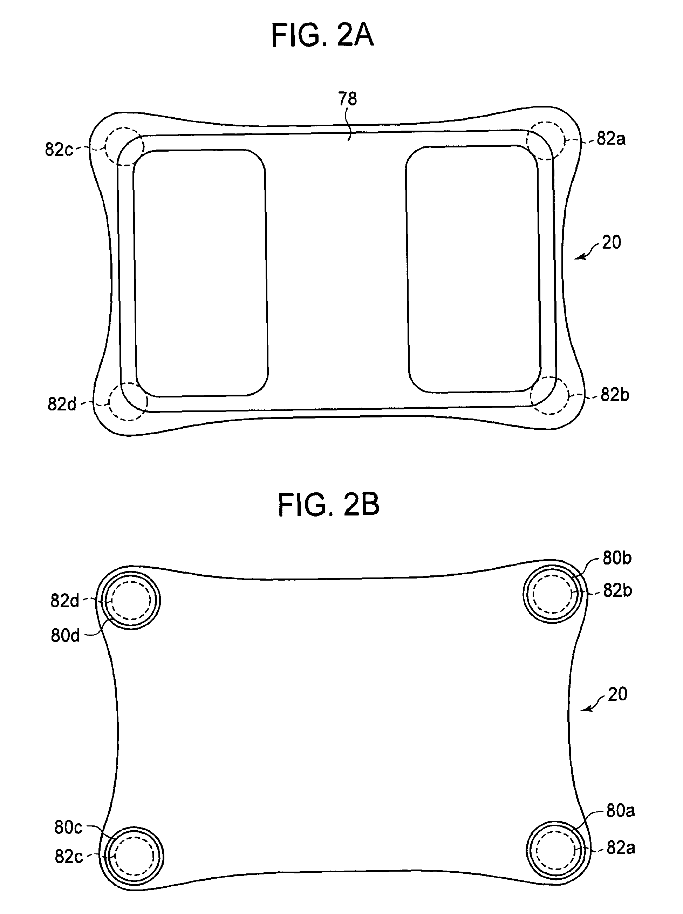

FIG. 2 is an upper surface view and an underside view of the controller used in the present embodiment. FIG. 2A is the top view, and FIG. 2B is the bottom view.
As illustrated in FIG. 2, the first controller 20 includes a supporter 78 for legs of a player to put on, and four load sensors 82a - 82d provided on the four corners of the supporter 20 for sensing loads applied to the supporter 78. The controller 20 transmits sensed load values sensed by the load sensors 82a - 82d to the game device body 12. On the first controller 20, the player adjusts loading the body weight to thereby manipulate actions of objects displayed on the TV monitor 4 to play the game.

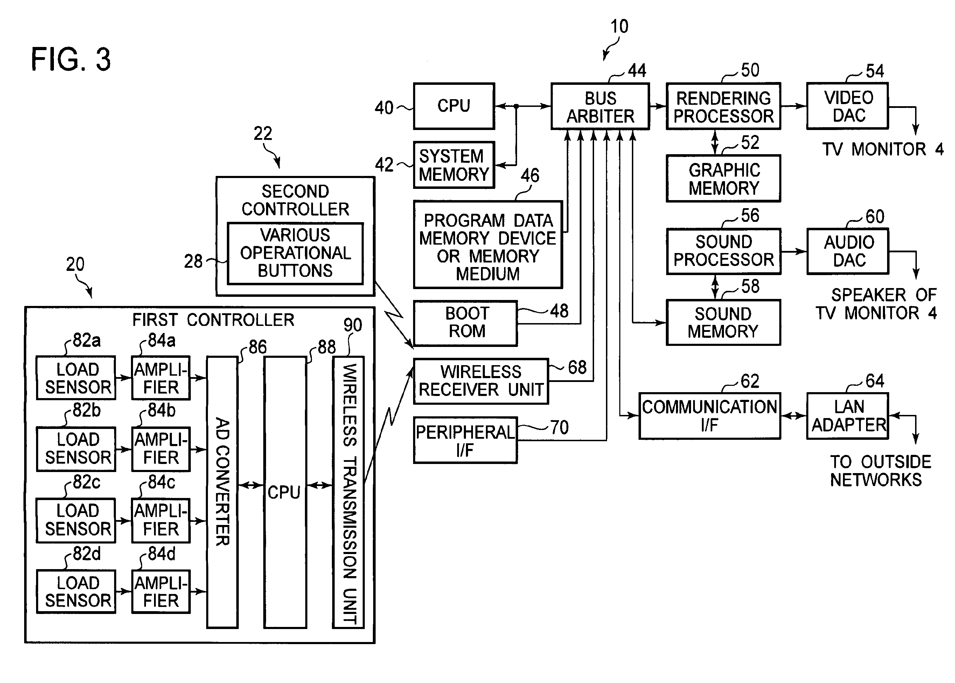

The second controller 22 is operated by, e.g., a hand 23 of the player. On the operation side of the second controller 22, various operation buttons 28, such as a power source button 28a, a cross button 28b, etc. (see FIG. 3) are provided. The player uses the second controller 22 to input commands, such as a start of the game, etc., in the game device body 12.

(Structure of the Game Device)

Next, the structure of the game device according to the present embodiment will be described. FIG. 3 is a block diagram of the game device according to the present embodiment.

As illustrated in FIG. 3, to the game device 10, a CPU 40 which executes the gate program, the general control of the entire system, the coordinates computation for image displays, etc., and a system memory (RAM) 42 to be used as the buffer memory which stores programs and data necessary for the CPU 40 to process are connected to a bus arbiter 44 by a common bus line. The bus arbiter 44 controls flows of programs and data to the respective blocks of the game device 10 and devices connected outside.

A program data memory device or a memory storage medium (including an optical disc, an optical disc drive, etc. for driving CD-ROMs, etc. which are game record media) 46 storing the game program and data (including image data and music data), and a BOOT ROM 48 storing programs and data for actuating the game device 10 are connected to the bus arbiter 44 via bus lines.

To generate display images, polygon data having three-dimensional local coordinates data forming objects to be displayed (vertex data), NURBS (Non Uniform Rational B-Spline) data (curved-face or control point data) are stored in the system memory 42, and these are arranged in a world coordinate system of a three-dimensional virtual space by the CPU 40 and a geometry processor (not illustrated) to convert the local coordinates to the world coordinate system.

Furthermore, in the world coordinate system, view point coordinates generated by an operation of a player and in accordance with a progress of the game are set, and objects present in the view range seen at this view point in a prescribed view direction and at a view angle are converted into a view point coordinate system having the view coordinates at the origin, and the converted coordinates of the objects are transmitted to the rendering processor 50.

The rendering processor 50 first makes interpolation processing, such as light source processing, on the transmitted coordinates of the objects and details the surfaces of the objects by adhering texture data stored in the graphic memory 52 to the objects. Furthermore, the rendering processor 50 projects from the three-dimensional stereoscopic projects the objects (polygons) on the two-dimensional plane (screen) for the display on the TV monitor 4 to convert the objects to the two-dimensional coordinate data (screen coordinate system), displays first the polygons whose depth in the Z coordinate are smaller, i.e., nearer to the view point coordinates to thereby generate two-dimensional images, and outputs the two-dimensional images on the TV monitor 4, such as a CRT, a liquid crystal display or others.

Via the bus arbiter 44, the rendering processor 50, which reproduces image (MOVIE) data read from the program data memory device or the memory storage medium 46 and generates images for image displays by an operation of a player or in accordance with a progress of the game, and a graphic memory 52 which stores graphic data, etc. necessary for the rendering processor 50 to generate images are connected to each other. The image signals outputted from the rendering processor 50 are converted from digital signals to analog signals by the video DAC 54 to be displayed by the TV monitor 4.

Via the bus arbiter 44, a sound processor 56 which reproduces music data read from the program data memory device or the memory storage medium 46 and generates effect sounds and voices by an operation of a player and in accordance with a progress of the game, and a sound memory 58 storing sound data, etc. necessary for the sound processor 56 to generate effect sounds and voices are connected to each other. The voice signals outputted from the sound processor 56 are converted from digital signals to analog signals by an audio DAC 60 to be outputted from the speaker of the TV monitor 4.

To the bus arbiter 44, a communication interface 62 is connected. The communication interface 62 is connected to outside networks, such as telephone circuits, etc., via a LAN adapter 64. The game device body 12 is connected to internets by the LAN adapter 64 and can communicate with other game devices, network severs, etc.

The communication interface 62 and the LAN adapter 64 use telephone circuits but may use terminal adapters (TA) or routers using telephone circuits, cable modems using cable TV circuits, wireless communication means using portable telephones or PHS and other communication means, such as optical fiber communication means, etc., using optical fibers.

To the bus arbiter 44, a wireless receiver unit 68 which wireless communicates with the controller 20 and the remote controller 22 is connected. The wireless receiver unit 68 receives information transmitted from the first controller 20 and information transmitted from the second controller 22.

To the bus arbiter 44, a peripheral I/F (Interface) 70 is connected. Via the peripheral I/F 70, various peripheral devices can be connected.

The game device 10 is not essentially a domestic game device and can be a personal computer, a portable electronic game machine, an electronic device, such as a portable telephone, a PDA or others, an information processing device of a game device or others installed in amusements facilities, shops such as game cafes, etc.

(Controller)

Next, the first controller used in the present embodiment will be described with reference to FIGs. 1 to 4.

The first controller 20 of the present embodiment functions as the operation device (operating means) of the game. The controller 20 includes the supporter (support plate) 78 for a player to get on, the load sensors 82a - 82d which detect loads applied to the supporter 78. The load sensors 82a - 82d are arranged on the four corners of the supporter 78.

More specifically, the first load sensor 82a is arranged at the right front part of the supporter 78, the second load sensor 82b is arranged at the right rear part of the supporter 78, the third load sensor 82c is arranged at the left front part of the supporter 78, and the fourth load sensor 82d is arranged at the left rear part of the supporter 78.

On the four corners of the first controller 20, the legs 80a - 80d are provided. The respective legs 80a - 80d are formed, e.g., cylindrical. The first load sensor 82a is supported by the leg 80a, the second load sensor 82b is supported by the leg 80b, the third load sensor 82c is supported by the leg 80c, and the fourth load sensor 82d is supported by the leg 80d. That is, the supporter 78 is supported by the four legs 80a - 80d via the load sensors 82a - 82d provided on the four corners.

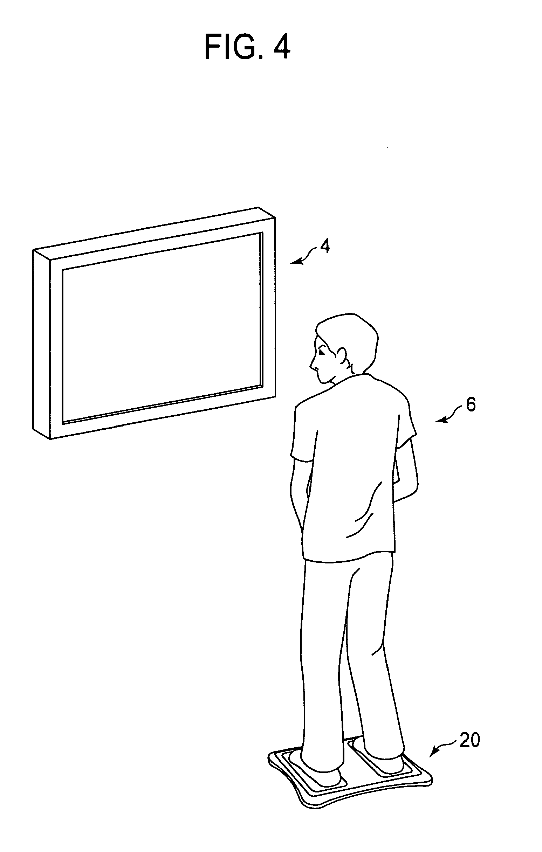

FIG. 4 is a perspective view of the state that a player is on the first controller.

When a player 6 gets on the supporter 78 of the first controller 20 as illustrated in FIG. 4, a load of the player 6 is transmitted to the load sensors 82a - 82d via the supporter 78 of the first controller 20.

The load sensors 82a - 82d can be, e.g., strain gauges-type load cells or others. The load sensors 82a - 82d output electric signals of intensities corresponding to applied loads.

The first controller 20 can be suitably a controller which includes a plurality of load sensors for detecting loads applied to the supporter.

As illustrated in FIG. 3, the first controller 20 includes a CPU 88 which controls the general operation of the first controller 20. To the CPU 88, a ROM, RAM or others not illustrated is connected. The CPU 88 controls the operation of the first controller 20 by a computer program stored in the ROM.

The respective load sensors 82a - 82d are connected to an AD converter 86 via the respective amplifiers 84a - 84d.

A wireless transmission unit 90 transmits data from the first controller 20 to the game device body 12. The wireless transmission unit 90 is provided in the inside of, e.g., the first controller 20. To the load sensors 82a - 82d, the amplifiers 84a - 84d, the AD converter 86, the CPU 88 and the wireless communication unit 90, prescribed voltages are supplied from a battery (not illustrated), such as electric cells or others.

The respective load sensors 82a - 82d output signals indicating inputted loads. The electric signals outputted from the respective load sensors 82a - 82d are amplified respectively by the amplifiers 84, converted from the analog signals to digital data by the AD converter 86, and inputted to the CPU 88. To the data of the detected values of the respective load sensors 82a - 82d, identification information of the respective load sensors 82a - 82d is added, and which load sensors 82a - 82d the detected load values belong to can be identified.

The CPU 88 obtains data f1 - f4 of detected load values of the respective load sensors 82a - 82d. f1 is data of the detected load value given by the first load sensor 82a, f2 is data of the detected load value given by the second load sensor 82b, f3 is the detected load value given by the third load sensor 82c, and f4 is the detected load value given by the fourth load sensor 82d.

The data f1 - f4 of the detected load values given by the load sensors 82a - 82d are transmitted as operational input data for the first controller 20 from the CPU 88 to the game device body 12 via the wireless transmission unit 90. The CPU 88 transmits for, e.g., each frame, the data f1 - f4 of the detected load values given by the load sensors 82a - 82d.

(Game Execution Processing)

The game execution processing of the game device according to the present embodiment will be described.

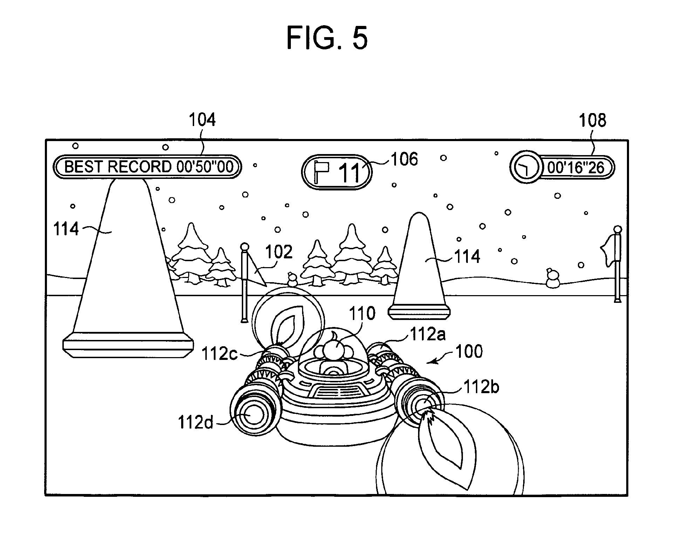

FIG. 5 is a view illustrating an example of the display images of the game device according to the present embodiment.

In the game of the present embodiment, a player operates with the first controller 20 directions (proceeding directions) of a hover machine (an object) 100 displayed on the TV monitor (a display, display means) 2 and velocities (moving velocities, proceeding velocities) to reach the hover machine 100 to the flag (a target to gain points) 102 displayed on the TV monitor 2 and obtain the flag 102, whereby the player goes on gaining points.

For example, when all of the flags 102 displayed are obtained, the game is set. The player can enjoy the game by competing in obtaining all the flags 102 within a shorter period of time.

On the upper left part of the screen of the TV monitor 4, the best record (BEST RECORD) 104 of the games so far played is indicated. At the upper central part of the TV monitor 4, a number 106 of remaining flags is indicated. At the upper right part of the screen of the TV monitor 4, an elapsed time 108 from the start of the game is indicated. On the screen of the TV monitor 4, flags 102 which are targets to gain points are displayed.

On the screen of the TV monitor 4, the object (the hover machine) 100 to be operated by a player in the three-dimensional virtual space is displayed. On the screen of the TV monitor 4, the hover machine 100 is displayed with an operator (a character) 110 riding the hover machine 100.

At the right front part, the right rear part, the left front part and the right rear part of the hover machine 100, jet engines 112a - 112d are respectively provided. The jet engines 112a - 112d are for applying driving forces to hover machine 100. The hover machine 100 runs on virtual ice with the driving forces of the jet engines 112a - 112d. The jet engines 112a, 112b on the right side, and the jet engines 112c, 112d on the left side are controlled independently. The jet engine 112a at the right front part and the jet engine 112b at the right rear part do not simultaneously jet. The jet engine 112c at the left front part and the jet engine 112d at the left rear part do not simultaneously jet.

For example, by both of the jet engine 112b at the right rear part and the jet engine 112d at the left rear part jetting, forward driving forces are applied to the hover machine 100 by the jet engine 112b at the right rear part and the jet engine 112d at the left rear part, and the hover machine 100 moves forward.

By both of the jet engine 112a at the right front part and the jet engine 112c at the left front part jetting, backward driving forces are applied to the hover machine 100, and the hover machine 100 moves backward.

By the jet engine 112a at the right front part and the jet engine 112d at the left rear part jetting, driving forces are applied to the hover machine 100 by the jet engine 112a at the right front part and the jet engine 112d at the left rear part. When the driving force of the jet engine 112a at the right front part and the driving force of the jet engine 112d at the left rear part are equal to each other, the hover machine 100 rotates right there without changing the central position. When the driving force of the jet engine 112a at the right front part is larger than the driving force of the jet engine 112d at the left rear part, the hover machine 100 moves backward, rotating right. When the driving force of the jet engine 112d at the left rear part is larger than the driving force of the jet engine 112a at the right front part, the hover machine 100 moves forward, rotating right.

By the jet engine 112b at the right rear part and the jet engine 112c at the left front part jetting, driving forces are applied to the hover machine 100 by the jet engine 112b at the right rear part and the jet engine 112c at the left front part. When the driving force of the jet engine 112b at the right rear part and the driving force of the jet engine 112c at the left front part are equal to each other, the hover machine 100 rotates left there without changing the central position. When the driving force of the jet engine 112b at the right rear part is larger than the deriving force of the jet engine 112c at the left front part, the hover machine 100 moves forward, rotating left. When the driving force of the jet engine 112c at the left front part is larger than the driving force of the jet engine 112b at the right rear part, the hover machine 100 moves backward, rotating left.

On the screen of the TV monitor 4, obstacles 114 that hinder the advance of the hover machine 100 are also displayed.

(Obtain Weight Data)

Before the game starts, a display which asks a player to get on the first controller 20 is displayed on the TV monitor 4.

When the player gets on the first controller 20, the measuring of the weight of the player is performed. Specifically, the total value of data $f_1$ - $f_4$ of detected load values given by the four load sensors 82a - 82d is taken for data F of the weight of the player. The weight F of the player is expressed by the following formula.

$$F = f_1 + f_2 + f_3 + f_4$$

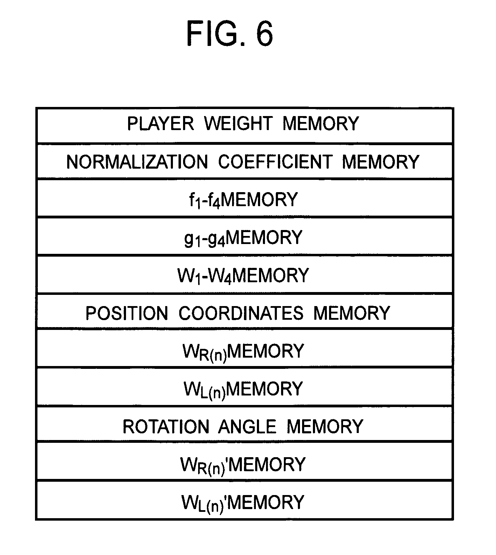

FIG. 6 is a view of the respective memories provided in the system memory.

The CPU 40 stores the data F of the weight of the player in the player weight memory provided in the system memory 42 (see FIG. 6).

(Obtain Normalization Coefficient)

Next, the CPU 40 calculates a coefficient a for normalizing the data $f_1$ - $f_4$. The coefficient (normalization coefficient) a for normalizing the $f_1$ - $f_4$ is expressed by the following formula.

$$a = 1/F$$

The CPU 40 stores the normalization coefficient a in the normalization coefficient memory provided in the system memory 42 (see FIG. 6).

The data $f_1$ - $f_4$ of the detected load values of the respective load sensors 82a - 82d are obtained for each frame. The CPU 40 stores the data $f_1$ - $f_4$ of the obtained detected load values in the $f_1$ - $f_4$ memory provided in the system memory 42 (see FIG. 6).

The data $g_{1(n)}$ - $g_{4(n)}$ of the detected load values given by normalizing the data $f_{1(n)}$ - $f_{4(n)}$ of the n-th frame are expressed by the following formulas.

$$g_{1(n)} = f_{1(n)} \times a$$

$$g_{2(n)} = f_{2(n)} \times a$$

$$g_{3(n)} = f_{3(n)} \times a$$

$$g_{4(n)} = f_{4(n)} \times a$$

Since the data $g_{1(n)}$ $g_{4(n)}$ are normalized, the total of the data $g_{1(n)}$ - $g_{4(n)}$ is 1.0.

The CPU 40 stores the normalized data $g_1$ - $g_4$ in the $g_1$ - $g_4$ memory provided in the system memory 42 (see FIG. 6).

(Calculate Load Data)

In the present embodiment, when a player is standing upright on the first controller 20 without motion, correction coefficients (correction values) $b_1$ - $b_4$ for making the data $g_1$ - $g_4$ of the normalized detected load values 0.25 are determined respectively in advance. The correction coefficients $b_1$ - $b_4$ are not determined for the respective players but are applied uniformly to all the players.

The correction coefficients $b_1$ - $b_4$ are applied uniformly to all the players here but the correction coefficients may be determined for the respective players.

Data (load data) $W_{1(n)}$ - $W_{4(n)}$ of the detected load values normalized and corrected are expressed by the following formulas.

$$W_{1(n)} = g_{1(n)} \times b_1 = f_{1(n)} \times a \times b_1$$

$$W_{2(n)} = g_{2(n)} \times b_2 = f_{2(n)} \times a \times b_2$$

$$W_{3(n)} = g_{3(n)} \times b_3 = f_{3(n)} \times a \times b_3$$

$$W_{4(n)} \ = \ g_{4(n)} \ \times \ b_4 \ = \ f_{4(n)} \ \times \ a \ \times \ b_4$$

The CPU 40 stores the calculated load data $W_{1(n)}$ - $W_{4(n)}$ in the $W_1$ - $W_4$ memory provided in the system memory 42.

(Lay out Objects)

The position coordinates $P_{(n)}$ of the object (the hover machine) 100 at the n-th frame in the world coordinate system are expressed as follows.
$$P_{(n)} \ = \ (P_{X(n)}, \ P_{Y(n)}, \ P_{Z(n)})$$

The position coordinates $P_{(n)}$ are stored in the position coordinates memory provided in the system memory 42 (see FIG. 6).
Here, the X Z plane in the world coordinate system is a plane in parallel with the virtual ground, and the Y axis of the world coordinate system is normal to the virtual ground.

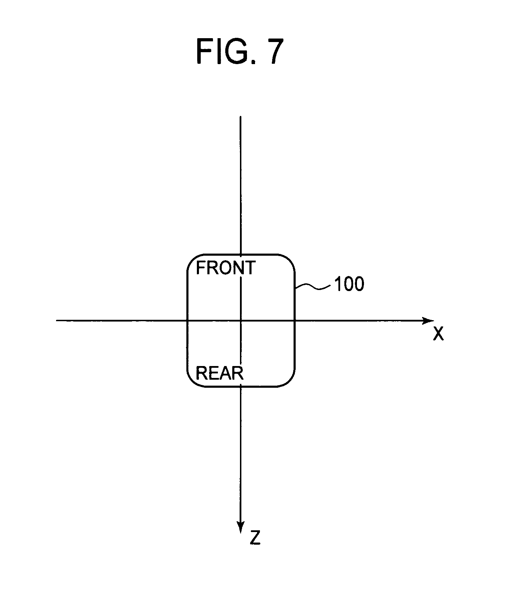

FIG. 7 is a view showing the relationships between the local coordinate system and an object. The left-to-right direction as viewed in FIG. 7 corresponds to the X axial direction of the local coordinate system. The rightward direction as viewed in FIG. 7 corresponds to the positive direction of the X axis, and the leftward direction as viewed in FIG. 7 corresponds to the negative direction of the X axis. The up-to-down direction as viewed in FIG. 7 corresponds to the Z axial direction of the local coordinate system. The downward direction as viewed in FIG. 7 is the positive direction of the Z axis, and the upward direction of the Z axis as viewed in FIG. $_7$ is the negative direction of the Z axis. The normal direction as viewed in FIG. 7 corresponds to the Y axial direction of the local coordinate system. The direction toward this side as viewed in FIG. 7 is the positive direction of the Y axis, and the away direction as viewed in FIG. 7 is the negative direction of the Y axis.
On the initial stage of the game, the central line of the object 100 in the left-to-right direction agrees with the X axial direction. More specifically, on the initial stage of the game, the rightward direction of the object 100 agrees with the positive direction of the X axis, and the leftward direction of the object 100 agrees with the negative direction of the X direction.
On the initial stage of the game, the central line of the object 100 in the front-to-rear direction agrees with the Z axial direction. More specifically, on the initial stage of the game, the rear direction of the object 100 agrees with the positive direction of the Z axis, and the forward direction of the object 100 agrees with the negative direction of the Z axis.
In the state that the object 100 is positioned on the horizontal plane, the central line of the object 100 in the up-to-down direction agrees with the Y axis. More specifically, in the state that the object 100 is positioned on the horizontal plane, the downward direction of the object 100 agrees with the positive direction of the Y axis, and the upward direction of the object 100 agrees with the negative direction of the Y axis.

(Determine Action of the Object)

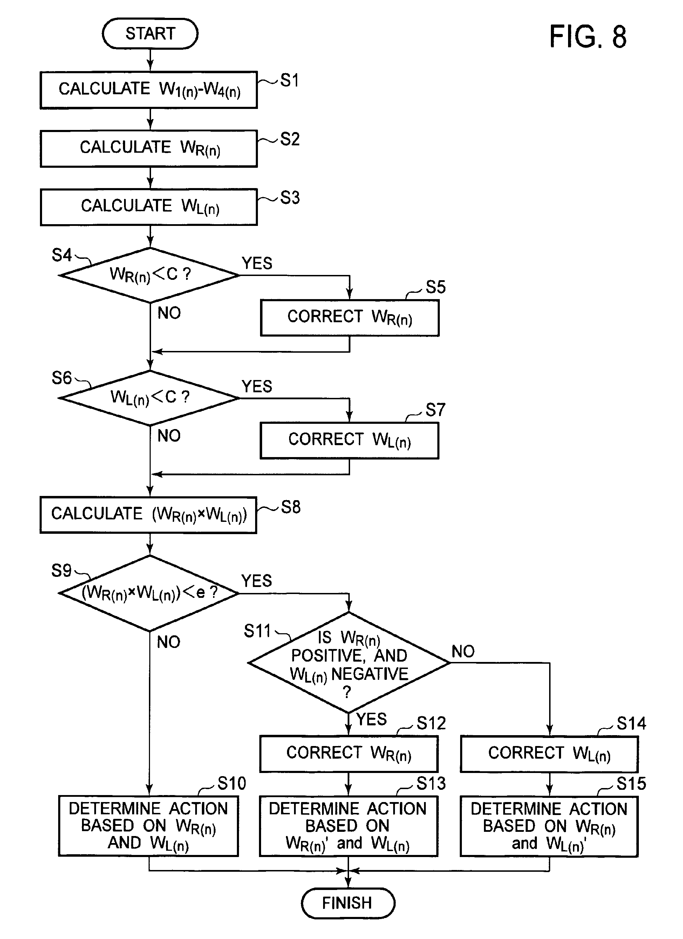

FIG. 8 is the flow chart of the processing of determination of action of the object.
When the execution of the game is started, the CPU 40 makes the normalization with the normalization coefficient a and the correction with the correction coefficients $b_1$ - $b_4$ as described above, based on the data $f_{1(n)}$ - $f_{4(n)}$ of the detected load values of the load sensors 82a - 82d to thereby calculate the respective load data $W_{1(n)}$ - $W_{4(n)}$ (Step S1). The CPU 40 makes the computation of the respective load data $W_{1(n)}$ - $W_{4(n)}$ for each frame.
The CPU 40 stores the calculated load data $W_{1(n)}$ - $W_{4(n)}$ in the $W_1$ - $W_4$ memory provided in the system memory 42 (see FIG. 6).
Then, the CPU 40 subtracts first load data $W_{1(n)}$ from the second load data $W_{2(n)}$ to thereby calculate the first value $W_{R(n)}$ (Step S2). The first value $W_{R(n)}$ is calculated for each frame.
The first value $W_{R(n)}$ is expressed by the following formula.
$$W_{R(n)} \ = \ W_{2(n)} \ - \ W_{1(n)}$$

The CPU 40 stores the calculated first value $W_{R(n)}$ in the $W_{R(n)}$ memory provided in the system memory 42 (see FIG. 6).

The CPU 40 subtracts the third load data $W_{3(n)}$ from the fourth load data $W_{4(n)}$ to thereby calculate the second value $W_{L(n)}$ (Step S3). The second value $W_{L(n)}$ is calculated for each frame.

The second value $W_{L(n)}$ is expressed by the following formula.

$$W_{L(n)} \;=\; W_{4(n)} \;-\; W_{3(n)}$$

The CPU 40 stores the calculated second value $W_{L(n)}$ in the $W_{L(n)}$ memory provided in the system memory 42 (see FIG. 6).

Next, when the absolute value of the first value $W_{R(n)}$ is smaller than a prescribed threshold value c (Step S4), the CPU 40 corrects the first value $W_{R(n)}$ (Step S5). Specifically, when the absolute value of the first value $W_{R(n)}$ is smaller than the prescribed threshold value c, a the first value $W_{R(n)}$ is multiplied by a prescribed correction coefficient d. The prescribed threshold value c is set at, e.g., 0.05. The prescribed correction coefficient d is set at, e.g., 0.02. Such processing is for preventing from the object 100 from acting by a small change of a load even when a player does not intend. This permits the action of the object 100 to be much suppressed when a player is standing upright without motion.

When the absolute value of the second value $W_{L(n)}$ is smaller than the prescribed threshold value c (Step S6), the CPU 40 corrects the second value $W_{L(n)}$ (Step S7). Specifically, when the absolute value of the second value $W_{L(n)}$ is smaller than the prescribed threshold value c, the second value $W_{L(n)}$ is multiplied by the prescribed correction coefficient d.

Next, the CPU 40 gives a product of the multiplication of the first value $W_{R(n)}$ by the second value $W_{L(n)}$, i.e., the value of ($W_{R(n)} \times W_{L(n)}$ (Step S8). When the value of ($W_{R(n)} \times W_{L(n)}$ is negative and is smaller than the prescribed threshold value e (Step S9), the processing of rotating the object to be described later is made (Steps S11 - S15). When the value of ($W_{R(n)} \times W_{L(n)}$ is positive or larger than the prescribed threshold value e even if ($W_{R(n)} \times W_{L(n)}$ is negative, the action of the object 100 is determined as follows, based on the first value $W_{R(n)}$ and the second value $W_{L(n)}$ (Step S10). The prescribed threshold value e can be, e.g., -0.01. Such use of the prescribed threshold value e is for preventing the rotation, etc. of the object 100 due to a small load change even when a player does not intend.

The CPU 40 determines an action of the object 100 as follows, based on the first value $W_{R(n)}$ and the second value $W_{L(n)}$.

The rotation angle $A_{(n)}$ of the object 100 in the n-th frame of the local coordinate system is expressed as follows.

$$A_{(n)} \;=\; (A_{X(n)}, \; A_{Y(n)}, \; A_{Z(n)})$$

$A_{X(n)}$ is the data of the rotation angle of the object 100 on the rotation axis of the X axis. $A_{Y(n)}$ is the data of the rotation angle of the object 100 on the rotation axis of the Y axis. $A_{Z(n)}$ is the data of the rotation angle of the object 100 on the rotation axis of the Z axis. The right rotation on the rotation axis is positive, and the left rotation on the rotation axis is negative.

When the plane on which the object 100 moves is horizontal, no rotation is made on the X axis and no rotation is made on the Z axis. The rotation on the Y axis alone is made. Here, to make the description simple, the description will be made by means of the example that the plane on which the object 100 moves is horizontal. Accordingly, the values of the $A_{X(n)}$ and the $A_{Z(n)}$ are 0 respectively here. $A_{Y(n)}$ is 0 when the central line of the object 100 in the front-to-rear direction is parallel with the Z axis and the forward direction of the object 100 agrees with the negative direction of the Z axis.

The object 100 may move on an inclined plane. When the object 100 moves on an inclined plane, not only the $A_{Y(n)}$ but also the $A_{X(n)}$ and the $A_{Z(n)}$ are considered.

The rotation angle $A_{Y(n)}$ in the local coordinate system is given by the following formula.

$$A_{Y(n)} \;=\; A_{Y(n-1)} \;+\; (W_{L(n)} \;-\; W_{R(n)})$$

$A_{Y(n-1)}$ is the data of the rotation angle of the n-1-th frame, and $A_{Y(n)}$ is the data of the rotation angle of the n-1-th frame. The data $A_{Y(n-1)}$ of the rotation angle of the n-1-th frame is stored in the rotation angle memory provided in the system memory 42 (see FIG. 6).

The minimum value of the ($W_{L(n)}$ - $W_{R(n)}$) is -1.0, and the maximum value thereof is 1.0.

The data of the rotation angle $A_{(n)}$ of the n-th frame such given is stored in the rotation angle memory provided in the system memory 42 (see FIG. 6).

When the object 100 is displayed in the world coordinate system, the data $A_{(n)}$ of a rotation angle is converted to a value $A_{(n)}'$ of the angle by a prescribed conversion formula or others.

As such prescribed conversion formula, the following conversion formula, for example, can be used.

$$A_{(n)}' = k \times A_{(n)} \times \pi$$

k is a prescribed coefficient.

The velocity $V_{(n)}$ of the object 100 in the n-th frame of the world coordinate system is expressed as follows.

$$V(n) = (V_{X(n)}, V_{Y(n)}, V_{Z(n)})$$

The velocity $V_{X(n)}$ of the object 100 in the X axial direction is expressed as follows.

$$V_{X(n)} = (W_{R(n)} + W_{L(n)}) \times \sin(A_{Y(n)}')$$

When the plane on which the object 100 moves is horizontal, the $V_{Y(n)}$, the velocity of the object 100 in the Y axial direction is 0.

The velocity $V_{Z(n)}$ of the object 100 in the Z axial direction is expressed as follows.

$$V_{Z(n)} = (W_{R(n)} + W_{L(n)}) \times \cos(A_{Y(n)}')$$

When the object 100 is displayed in the world coordinate system, the conversion or others of the $V_{X(n)}$, the $V_{Y(n)}$ and the $V_{Z(n)}$ is made by a prescribed conversion formula or others.

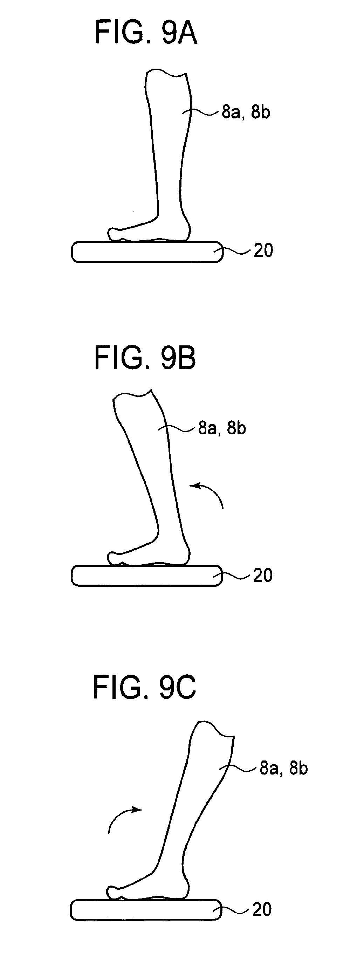

FIG. 9 is views of operations of the first controller with the legs of a player.

When the gravity center of the right leg 8a of the player is neither forward nor backward (see FIG. 9A), the first value $W_{R(n)}$ is $W_{R(n)}$=0. In this case, the jet engine 112a at the right front part and the jet engine at the right rear part dot not jet.

When the center of the gravity of the left leg 8b of the player is neither forward nor backward (see FIG. 9A), the second value $W_{L(n)}$ is $W_{L(n)}$=0. In this case, the jet engine 112c at the left front part and the jet engine 112d at the left rear part do not jet.

When the player applies the weight to the side of the tiptoe of the right leg 8a (see FIG. 9B), the first value $W_{R(n)}$ is $W_{R(n)}$<0. In this case, the jet engine 112b at the right rear part jets. The intensity of the jetting is set, based on the magnitude of the absolute value of the first value $W_{R(n)}$.

When the player applies the weight to the side of the tiptoe of the left leg 8b (see FIG. 9B), the second value $W_{L(n)}$ is $W_{L(n)}$<0. In this case, the jet engine 112d at the left rear part jets. The intensity of the jetting is set, based on the magnitude of the absolute value of the second value $W_{L(n)}$.

When the player applies the weight to the side of the heel of the right leg 8a (see FIG. 9C), the first value $W_{R(n)}$ is $W_{R(n)}$>0. In this case, the jet engine 112a at the right front part jets. The intensity of the jetting is set, based on the magnitude of the absolute value of the first $W_{R(n)}$.

When the player applies the weight to the side of the heel of the left leg 8b (see FIG. 9C), the second value $W_{L(n)}$ is $W_{L(n)}$>0. In this case, the jet engine 112c at the left front part jets. The intensity of the jetting is set, based on the magnitude of the absolute value of the second $W_{L(n)}$.

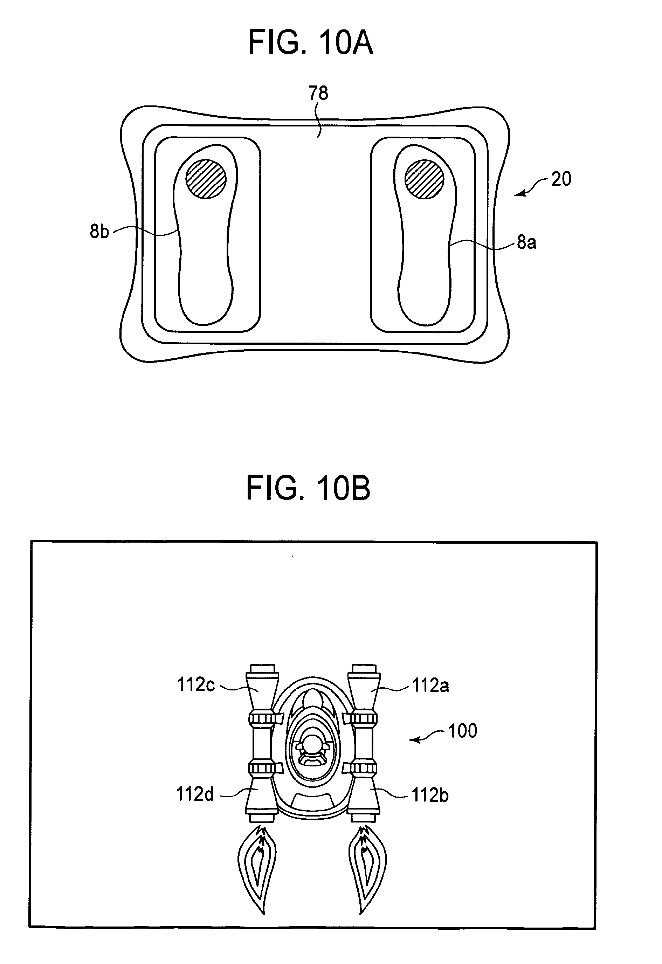

FIG. 10 is views illustrating the case that a player applies the weight to the side of the tiptoe of the right leg and the side of the tiptoe of the left leg. The hatchings in FIG. 10 indicate the parts the player applies the weight to. FIG.

10A is a plan view illustrating loading the first controller, and FIG. 10B is an example of a display image illustrating a motion of the object.

When the player applies the weight to the side of the tiptoe of the right leg 8a and also to the side of the tiptoe of the left leg 8b, the CPU 40 displays on the TV monitor 4 the jetting of the jet engines 112b at the right rear part and the jetting of the jet engine 112d at the left rear part. The action of the object 100 is determined as described above.

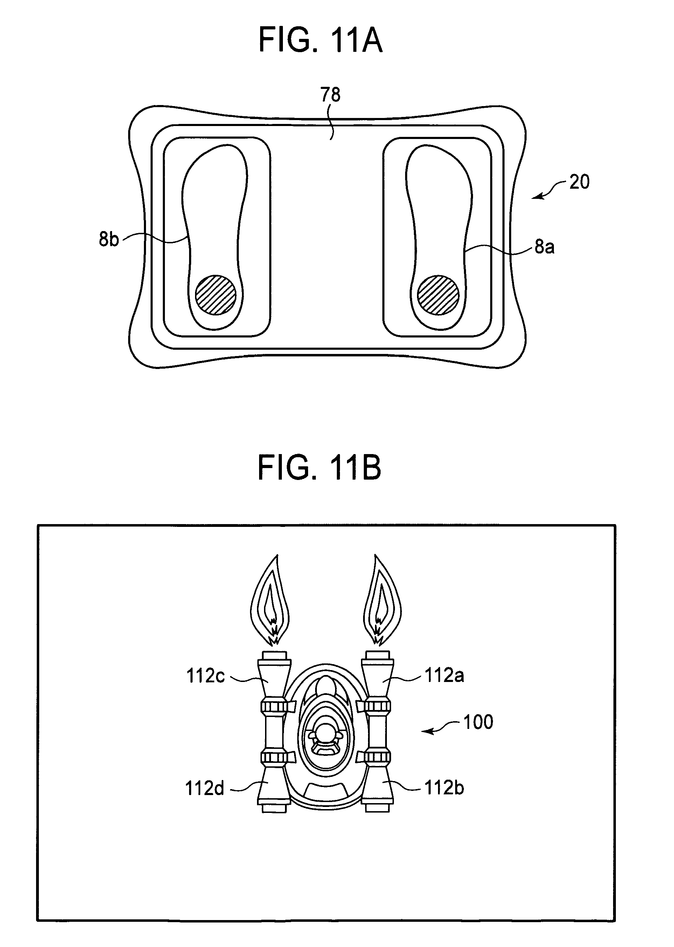

FIG. 11 is a view illustrating the case that a player applies the weight to the side of the heel of the right leg and also to the side of the heel of the left leg. The hatchings in FIG. 11 indicate the portions to apply the weight to. FIG. 11A is a plan view of loading the first controller, and FIG. 11B is a view illustrating an example of display image of the action of the object.

When a player applies the weight to the heel of the right leg 8a and also to the side of the heel of the left leg 8b, the CPU 40 displays on the TV monitor 4 the jetting of the jet engine 112a at the right front part and also the jetting of the jet engine 112b at the left front part. The action of the object 100 is determined as described above.

In Step S9 (see FIG. 8) described above, when the value of the ($W_{R(n)} \times W_{L(n)}$ is negative, and the value of the ($W_{R(n)} \times W_{L(n)}$ is smaller than the prescribed threshold value e, the processing of the rotation of the object 100 is made as follows.

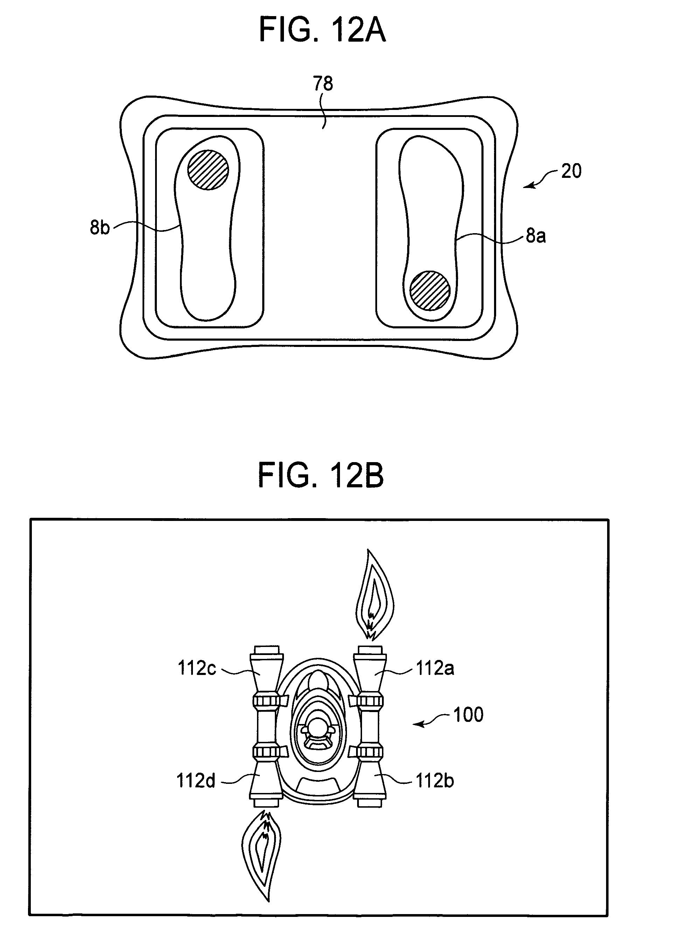

FIG. 12 is a view illustrating the case that the player applies the weight to the side of the heel of the right leg and to the side of the tiptoe of the left leg. The hatchings in FIG. 12 indicate the portions the player applies the weight. FIG. 12A is a plan view of loading the first controller, and FIG. 12B a view illustrating an example of the display image of the action of the object.

As illustrated in FIG. 12, when the player applies the weight to the side of the tiptoe of the left leg 8b while applying the weight to the side of the heel of the right leg 8a, the first value $W_{R(n)}$ and the second value $W_{L(n)}$ are as follows.

$$W_{R(n)} > 0$$

$$W_{L(n)} < 0$$

As described above, when the first value $W_{R(n)}$ is positive, and the second value $W_{L(n)}$ is negative (Step S1l) the object 100 rotates right.

In this case, however, it is relatively easy for the left leg 8b to apply the weight to the side of the tiptoe, but it is not always easy for the right leg 8a to apply the weight sufficiently to the side of the heel. Accordingly, in this case, the first value $W_{R(n)}$ is corrected (Step S12). Specifically, the first value $W_{R(n)}$ is multiplied by the prescribed correction coefficient h. The prescribed correction coefficient h can be, e.g., 2.

The corrected first value $W_{R(n)}'$ is expressed as follows.

$$W_{R(n)}' = W_{R(n)} \times h$$

The CPU 40 stores the corrected first value $W_{R(n)}'$ in the $W_{R(n)}'$ memory provided in the system memory 42 (see FIG. 6).

When the object 100 is rotated right, by using the corrected first value $W_{R(n)}'$ and the second value $W_{L(n)}$, which has not been corrected, an action of the object 100 is determined as follows (Step S13).

The data $A_{Y(n)}$ of the rotation angle in the local coordinate system is given by the following formula.

$$A_{Y(n)} = A_{Y(n-1)} + (W_{L(n)} - W_{R(n)}')$$

$AY_{(n-1)}$ is the data of the rotation angle in the n-1-th frame, and $A_{Y(n)}$ is the data of the rotation angle in the n-th frame. The data of the rotation angle of the n-1-th frame is stored in the rotation angle memory provided in the system memory 42 (see FIG. 6).

The data of the rotation angle $A_{Y(n)}$ of the n-th frame thus given is stored in the rotation angle memory provided in the system memory 42 (see FIG. 6).

The velocity $V_{X(n)}$ of the object 100 in the X axial direction is expressed as follows.
$$V_{X(n)} = (W_{R(n)}' + W_{L(n)}) \times \sin(A_{Y(n)}')$$

When the plane the object 100 moves on is horizontal, the velocity $V_{Y(n)}$ of the object 100 in the Y axial direction is 0.
The velocity $V_{Z(n)}$ of the object 100 in the Z axial direction is expressed as follows.
$$V_{Z(n)} = (W_{R(n)}' + W_{L(n)}) \times \cos(A_{Y(n)}')$$

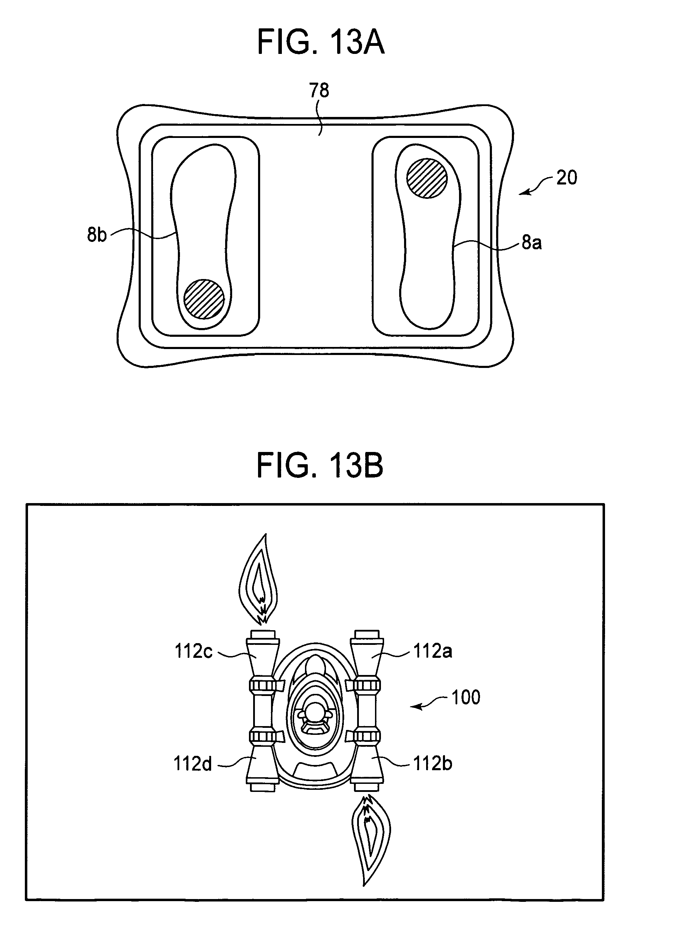

The CPU 40 displays on the TV monitor 4 the jetting of the jet engine 112a at the right front part and also the jetting of the jet engine 112d at the left rear part. The intensities of the respective jettings are set, respectively based on the magnitude of the absolute value of the first value $W_{R(n)}$ and the magnitude of the absolute value of the second value $W_{L(n)}'$
FIG. 13 is views illustrating the case that a player applies the weight to the side of the heel of the left leg and to the side of the tiptoe of the right leg. The hatchings in FIG. 13 indicate the portions the player applies the weight to. FIG. 13A is a plan view illustrating loading the first controller, and FIG. 13B is a view illustrating an example of a display image of the action of the object.
As illustrated in FIG. 13, when the player applies the weight to the tiptoe of the side of the right leg 8a while applying the weight to the heel of the left leg 8b, the first value $W_{R(n)}$ and the second value $W_{L(n)}$ are as follows.
$$W_{R(n)} < 0$$

$$W_{L(n)} > 0$$

When the first value $W_{R(n)}$ is negative, and the second value $W_{L(n)}$ is positive as above, the object 100 is rotated left.
In this case, however, it is relatively easy to apply the weight to the side of the tiptoe of the right leg 8a, but it is not always easy sufficiently apply the weight to the side of the heel of the left leg 8b. Accordingly, in this case, the second value $W_{L(n)}$ is corrected (Step S14). Specifically, the second value $W_{L(n)}$ is multiplied by a prescribed correction coefficient h. The prescribed correction coefficient h can be, e.g., 2.
The corrected second value $W_{L(n)}'$ is expressed as follows.
$$W_{L(n)}' = W_{L(n)} \times h$$

The CPU 40 stores the corrected second value $W_{L(n)}'$ in the $W_{L(n)}'$ memory provided in the system memory 42 (see FIG. 6).
When the object 100 is rotated left, an action of the object 100 is determined as follows by using the first value $W_{R(n)}$ not corrected and the corrected second value $W_{L(n)}'$ (Step S16).
The data of a rotation angle $A_{Y(n)}$ in the local coordinate system is given by the following formula.
$$A_{Y(n)} = A_{Y(n-1)} + (W_{L(n)}' - W_{R(n)})$$

$A_{Y(n-1)}$ is the data of the rotation angle of the n-1-th frame, and the $A_{Y(n)}$ is the data of the rotation angle of the n-th frame. The data $A_{Y(n-1)}$ of the rotation angle of the n-1-th frame is stored in the rotation angle memory provided in the system memory 42 (see FIG. 6).

The data of the rotation angle $A_{Y(n)}$ of the n-th frame thus given is stored in the rotation angle memory provided in the system memory 42 (see FIG. 6).

The velocity $V_{X(n)}$ of the object 100 in the X axial direction is expressed as follows.

$$V_{X(n)} = (W_{R(n)} + W_{L(n)}') \times \sin(A_{Y(n)}')$$

When the plane the object 100 moves on is horizontal, the velocity $V_{Y(n)}$ of the object 100 in the Y axial direction is 0.

The velocity $V_{Z(n)}$ of the object 100 in the Z axial direction is expressed as follows.

$$V_{Z(n)} = (W_{R(n)} + W_{L(n)}') \times \cos(A_{Y(n)}')$$

The CPU 40 displays on the TV monitor 4 the image that the jet engine 112c at the left front part jets, and also the jet engine 112b at the right rear part jets. The intensities of the respective jettings are set, respectively based on the magnitudes of the absolute value of the first value $W_{R(n)}$ and the magnitudes of the absolute value of the second value $W_{L(n)}$.

Thus, the action of the object 100 is determined for each frame.

The processing of determinating an action of the object illustrated in FIG. 8 is repeated until the game finishes.

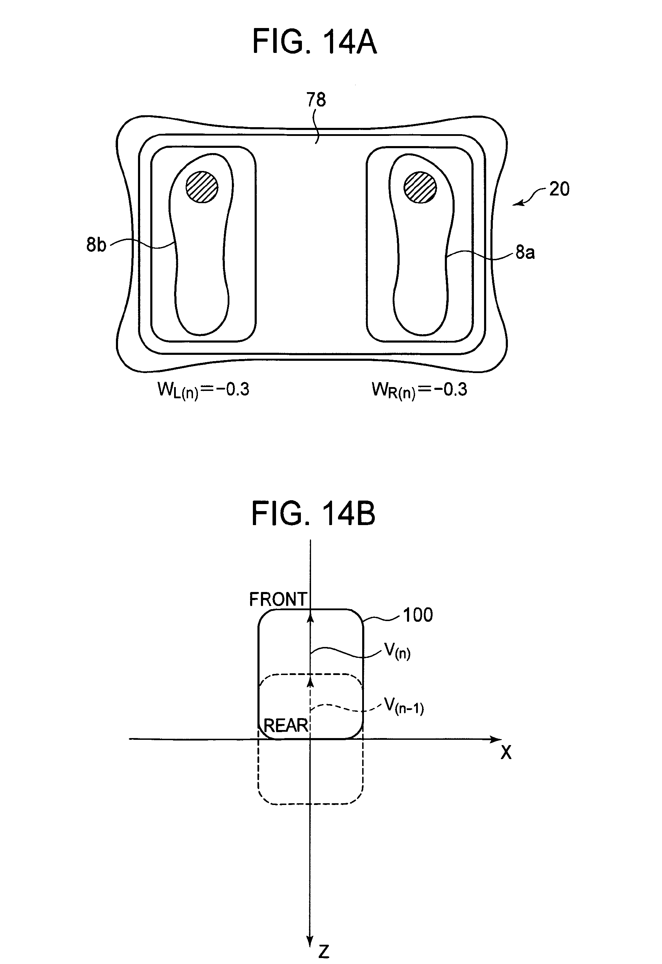

Next, actions of the object 100 will be more specifically described with reference to FIGs. 14 to 17.

FIG. 14 is views illustrating a specific example (Part 1) of the actions of the object. FIG. 14A is a plan view illustrating the loading applied to the first controller, and FIG. 14B is a plan view illustrating the action of the object.

In FIG. 14, the data $A_{Y(n-1)}$ of the rotation angle of the n-1-th frame is 0, the first value $W_{R(n)}$ is -0.3, and the second value $W_{L(n)}$ is also -0.3

The value given by subtracting the first value $W_{R(n)}$ from the second value $W_{L(n)}$ is 0, and accordingly, the data $A_{Y(n)}$ of the rotation angle of the n-th frame is the same value as the data $A_{Y(n-1)}$ of the rotation angle of the n-1-th frame. Accordingly, the object 100 does not change the direction.

The value given by adding the first value $W_{R(n)}$ and the second value $W_{L(n)}$ is -0.6, and accordingly, the object 100 proceeds in the negative direction of the Z axis at a velocity corresponding to the magnitude of 0.6.

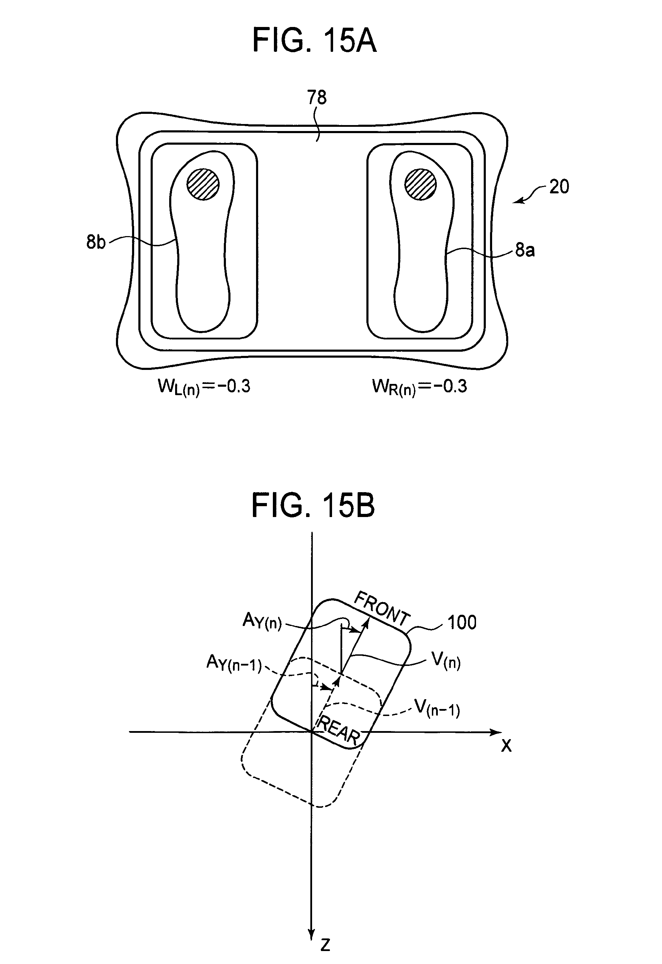

FIG. 15 is views illustrating a specific example (Part 2) of the actions of the object. FIG. 15A is a plan view illustrating the loading applied to the first controller, and FIG. 15B is a plan view illustrating the action of the object.

FIG. 15 illustrates the case that the data $A_{Y(n-1)}$ of the rotation angle of the n-1 frame is not 0, the first value $W_{R(n)}$ is -0.3, and the second value $W_{L(n)}$ is also -0.3.

The value given by subtracting the first value $W_{R(n)}$ from the second value $W_{L(n)}$ is 0, and accordingly the data $A_{Y(n)}$ of the rotation angle of the n-th frame is the same value as the data $A_{Y(n-1)}$ of the rotation angle of the n-1-th frame. Accordingly, the object 100 is retained in the same direction as in the n-1-th frame.

The value given by adding the first value $W_{R(n)}$ and the second value $W_{L(n)}$ is -0.6, and accordingly, in the case of FIG. 15, the object 100 proceeds at a velocity corresponding to the magnitude of 0.6 in a direction corresponding to the data $A_{Y(n)}$ of the rotation angle.

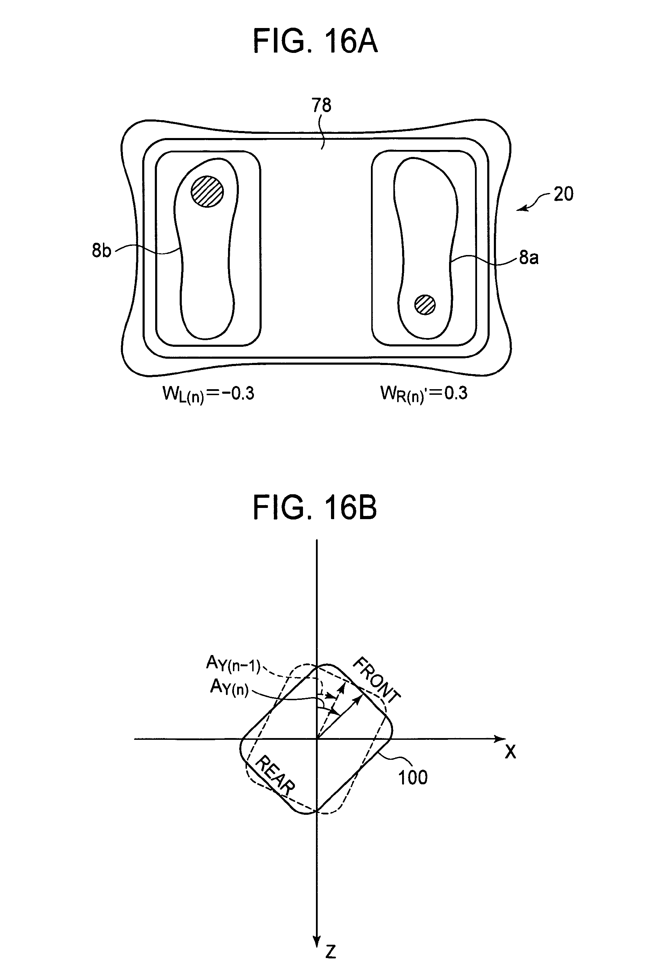

FIG. 16 is views illustrating a specific example (Part 3) of the actions of the object. FIG. 16A is a plan view illustrating the loading applied to the first controller, and FIG. 16B is a plan view illustrating the action of the object.

FIG. 16 illustrates the case that the first value $W_{R(n)}'$ is 0.3, and the second value $W_{L(n)}$ is -0.3.

The value given by subtracting the first value $W_{R(n)}'$ from the second value $W_{L(n)}$ is -0.6, and accordingly, the data $A_{Y(n)}$ of the rotation angle of the n-th frame is varied by -0.6 from the data $A_{Y(n-1)}$ of the rotation angle of the n-1-th frame. More specifically, by the above-described conversion formula, the value of the rotation angle varies by -0.6 $k\pi$. In FIG. 16, in which the direction toward this side as viewed in the drawing is the positive direction of the Y axis, and the away direction as viewed in the drawing is the negative direction of the Y axis, the left rotation on the rotation axis is negative. Accordingly, when FIG. 16 is viewed from the front, the rotation direction of the object 100 is right.

The value given by adding the first value $W_{R(n)}'$ and the second value $W_{L(n)}$ is 0, and accordingly the positional coordinates of the center of the object 100 do not vary.

Thus, in the case of FIG. 16, the object 100 does not proceed but rotates right there by an angle corresponding to the magnitude of 0.6.

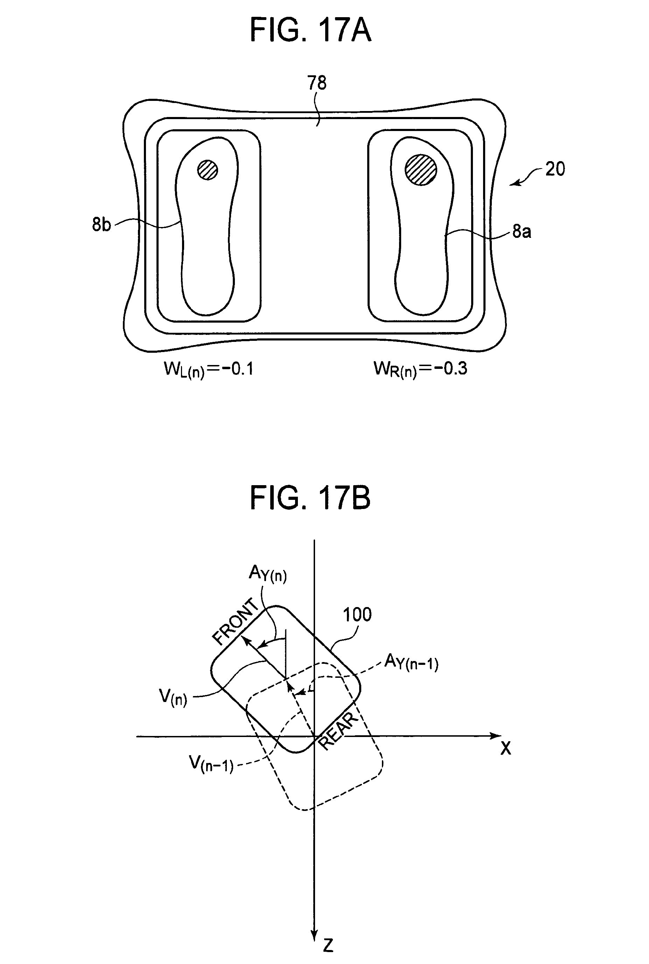

FIG. 17 is views illustrating a specific example (Part 4) of the actions of the object. FIG. 17A is a plan view illustrating the loading applied to the first controller, and FIG. 17B is a plan view illustrating the action of the object.

FIG. 17 illustrates the case that the first value $W_{R(n)}$ is -0.3, and the second value $W_{L(n)}$ is -0.1.

The value given by subtracting the first value $W_{R(n)}$ from the second value $W_{L(n)}$ is 0.2, and accordingly, the data $A_{Y(n)}$ of the rotation angle of the n-th frame is varied by +0.2 from the data $A_{Y(n-1)}$ of the rotation angle of the n-1-th frame. More specifically, when the above-described conversion formula is used, the value of the rotation angle is varied by +0.2 k$\pi$. In FIG. 17, in which the direction toward this side as viewed in the drawing is the positive direction of the Y axis, and the away direction as viewed in the drawing is the negative direction of the Y axis, the right rotation on the rotation axis is positive. Accordingly, when FIG. 17 is viewed from the front, the rotation direction of the object 100 is left.

The value given by adding the first value $W_{R(n)}$ and the second value $W_{L(n)}$ is -0.4.

Accordingly, in the case of FIG. 17, the object 100 proceeds at the velocity corresponding to the magnitude of 0.4 while rotating left by the angle corresponding to 0.2.

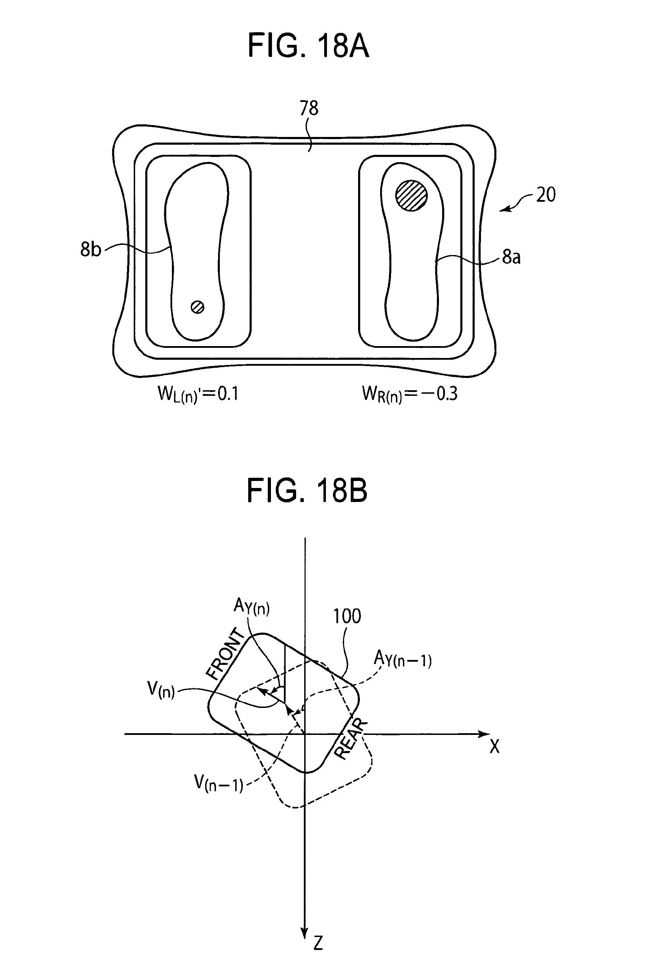

FIG. 18 is views illustrating a specific example (Part 5) of the actions of the object. FIG. 18A is a plan view illustrating the loading applied to the first controller, and the FIG. 18B is a plan view illustrating the action of the object.

FIG. 18 illustrates the case that the first value $W_{R(n)}$ is -0.3, and the second value $W_{L(n)}'$ is 0.1.

The value given by subtracting the first value $W_{R(n)}$ from the second value $W_{L(n)}'$ is 0.4, and accordingly, the data $A_{Y(n)}$ of the rotation angle of the n-th frame is varied by +0.4 from the data $A_{Y(n-1)}$ of the rotation angle of the n-1-th frame. More specifically, when the above-described conversion formula is used, the value of the rotation angle is varied by +0.4 k$\pi$. In FIG. 18, in which the direction toward this side as viewed in the drawing is the positive direction of the Y axis, and the away direction as viewed in the drawing is the negative direction of the Y axis, the right rotation on the rotation axis is positive. Accordingly, when FIG. 18 is viewed from the front, the rotation direction of the object 100 is left.

The value given by adding the first value $W_{R(n)}$ and the second value $W_{L(n)}'$ is -0.2.

Accordingly, in the case of FIG. 18, the object 100 proceeds at the velocity corresponding to the magnitude of 0.2 while rotating left by the angle corresponding to 0.4.

Thus, the actions of the objects 100 are determined, and the object 100 on the screen of the TV monitor 4 acts corresponding to the determined actions.

In the game of the present embodiment, all the flags 102 have been got, the game finishes.

As described above, according to the present embodiment, the first value is calculated, based on a difference between the first load data based on an output of the first load sensor 82a provided at the right front part of the supporter 78 for a player to be supported on, and the second load data based on an output of the second load sensor 82b provided at the right rear part of the supporter 78, and the second value is calculated, based on a difference between the third load data based on an output of the third load sensor 82c provided at the left front part of the supporter 78 and the fourth load data based on an output of the fourth load sensor 82d provided at the left rear part of the supporter 78. Then, based on the first value and the second value, an action of the object to be displayed on the display screen is determined. Thus, according to the present embodiment, the rotation, etc. of the object 100 can be made, which makes the game realistically enjoyable.

[Modified Embodiments]

The present invention is not limited to the above-described embodiment and can cover other various modifications.

For example, the above-described embodiment is described by means of the example of determinating the actions of the hover machine by the controller, but the object to have the actions determined is not limited to the hover machine. The present invention is applicable to determine actions of, e.g., four-wheel vehicles, two-wheel vehicles, one-wheel vehicles, etc. For example, when the value given by adding the first value and the second value is positive, objects, such as four-wheel vehicles, two-wheel vehicles, one-wheel vehicles, etc., may be caused to proceed, and the objects, such as four-wheel vehicles, two-wheel vehicles, one-wheel vehicles, etc., may be caused to retreat when the value given by adding the first value and the second value is positive. That is, the objects may be moved in the same directions as the object exemplified in the above-described embodiment or may be moved in directions opposite to the directions the exemplified object in the above-described embodiment is moved in. The objects may be turned in the same directions as the object exemplified in the above-described embodiment or may be turned in the directions opposite to the directions the object exemplified in the above-described embodiment is turned in.

INDUSTRIAL APPLICABILITY

The game device and the computer program according to the present invention is useful to provide a game which can be realistically operated.

REFERENCE NUMBERS

[0180]

| | |
|---|---|
| 2 ... | TV table |
| 4 ... | TV monitor |
| 6 ... | player |
| 8a, 8b ... | legs |
| 10 ... | game device |
| 12 ... | game device body |
| 20 ... | the first controller |
| 22 ... | the second controller |
| 28 ... | various operational buttons |
| 28a ... | source button |
| 28b ... | cross button |
| 40 ... | CPU |
| 42 ... | system memory (RAM) |
| 44 ... | bus arbiter |
| 46 ... | program data memory device or memory storage medium |
| 48 ... | BOOT ROM |
| 50 ... | rendering processor |
| 52 ... | graphic memory |
| 54 ... | video DAC |
| 56 ... | sound processor |
| 58 ... | sound memory |
| 60 ... | audio DAC |
| 62 ... | communication interface |
| 64 ... | LAN adaptor |
| 68 ... | wireless receiver unit |
| 70 ... | peripheral interface |
| 78 ... | supporter |
| 80a - 80d ... | leg |
| 82a - 82d ... | load sensor |
| 86 ... | AD converter |
| 88 ... | CPU |
| 90 ... | wireless transmission unit |
| 100 ... | object |
| 102 ... | flag |
| 104 ... | best record |
| 106 ... | number of remaining flags |
| 108 ... | elapsed time |
| 110 ... | character |
| 112a - 112d ... | jet engines |
| 114 ... | obstacle |

**Claims**

1. A computer program for operating a computer as a game device using a controller including a supporter for supporting a player; a first load sensor provided at a right front part of the supporter, for detecting a load from the supporter; a second load sensor provided at a right rear part of the supporter, for detecting a load from the supporter, a third load sensor provided at a left front part of the supporter, for detecting a load from the supporter, and a fourth load sensor provided at a left rear part of the supporter, for detecting a load from the supporter,
said computer being operated as an action determination means which calculates a first value, based on a difference of a first load data based on an output of the first load sensor and a second load data based on an output of the second load sensor, calculates a second value based on a difference between a third load data based on an output of the third load sensor and a fourth load data based on an output of the fourth load sensor, and determines an action of an object to be displayed on a display screen, based on the first value and the second value.

2. A computer program according to claim 1, wherein
   a direction of the object is varied, based on a difference between the first value and the second value.

3. A computer program according to claim 1 or 2, wherein
   a velocity of the object is determined, based on a sum of the first value and the second value.

4. A computer program according to any one of claims 1 to 3, wherein
   the first value is a value given by subtracting the first load data from the second load data,
   the second value is a value given by subtracting the third load data from the fourth load data,
   the action determination means, when the first value is positive, and the second value is negative, corrects the first value by a prescribed correction coefficient and varies a direction of the object, based on a difference between the corrected first value and the second value not corrected,
   the action determination means, when the first value is negative, and the second value is positive, corrects the second value by the prescribed correction coefficient and varies a direction of the object, based on a difference between the first value not corrected and the corrected second value.

5. A computer program according to any one of claims 1 to 3, wherein
   the first value is a value given by subtracting the first load data from the second load data,
   the second value is a value given by subtracting the third load data from the fourth load data,
   the action determination means, when the first value is positive, and the second value is negative, corrects the first value by a prescribed correction coefficient and determines a velocity of the object, based on a sum of the corrected first value and the second value not corrected, and
   the action determination means, when the first value is negative, and the second value is positive, determines a velocity of the object, based on a sum of the first value not corrected and the corrected second value.

6. A computer program according to any one of claims 1 to 5, wherein
   the object is caused to proceed or to retreat, based on a sign of the sum of the first value and the second value.

7. A non-transient memory storage medium, readable by a computer, which stores the computer program according to any one of claims 1 to 6.

8. A game device comprising a controller including a supporter for supporting a player, and a first load sensor provided at a right front part of the supporter, for detecting a load from the supporter, a second load sensor provided at a right rear part of the supporter, for detecting a load from the supporter, a third load sensor provided at a front left part of the supporter, for detecting a load from the supporter and a fourth load sensor provided at a left rear part of the supporter, for detecting a load from the supporter,
   the game device comprising an action determination means which calculates a first value based on a difference between a first load data based on an output of the first load sensor and a second load data based on an output of the second load sensor, calculates a second value, based on a difference between a third load data based on an output of the third load sensor and a fourth load data based on an output of the fourth load sensor, and determines an action of an object to be displayed on a display screen, based on the first value and the second value.

# FIG. 1

y

## FIG. 2A

## FIG. 2B

# FIG. 3

EP 2 455 147 A1

# FIG. 4

# FIG. 5

# FIG. 6

| PLAYER WEIGHT MEMORY |
| :---: |
| NORMALIZATION COEFFICIENT MEMORY |
| $f_1$-$f_4$MEMORY |
| $g_1$-$g_4$MEMORY |
| $W_1$-$W_4$MEMORY |
| POSITION COORDINATES MEMORY |
| $W_{R(n)}$MEMORY |
| $W_{L(n)}$MEMORY |
| ROTATION ANGLE MEMORY |
| $W_{R(n)}'$MEMORY |
| $W_{L(n)}'$MEMORY |

# FIG. 7

# FIG. 8

START

S1 — CALCULATE $W_{1(n)}$-$W_{4(n)}$

S2 — CALCULATE $W_{R(n)}$

S3 — CALCULATE $W_{L(n)}$

S4 — $W_{R(n)} < C$ ?

YES → S5 — CORRECT $W_{R(n)}$

NO

S6 — $W_{L(n)} < C$ ?

YES → S7 — CORRECT $W_{L(n)}$

NO

S8 — CALCULATE $(W_{R(n)} \times W_{L(n)})$

S9 — $(W_{R(n)} \times W_{L(n)}) < e$ ?

YES → S11 — IS $W_{R(n)}$ POSITIVE, AND $W_{L(n)}$ NEGATIVE ?

NO

S11 NO → S14 — CORRECT $W_{L(n)}$

S11 YES → S12 — CORRECT $W_{R(n)}$

S10 — DETERMINE ACTION BASED ON $W_{R(n)}$ AND $W_{L(n)}$

S13 — DETERMINE ACTION BASED ON $W_{R(n)}'$ and $W_{L(n)}$

S15 — DETERMINE ACTION BASED ON $W_{R(n)}$ and $W_{L(n)}'$

FINISH

## FIG. 9A

8a, 8b

20

## FIG. 9B

8a, 8b

20

## FIG. 9C

8a, 8b

20

EP 2 455 147 A1

# FIG. 10A

78

8b

8a

20

# FIG. 10B

112c

112a

100

112d

112b

27

# FIG. 11A

# FIG. 11B

# FIG. 12A

# FIG. 12B

## FIG. 13A

## FIG. 13B

# FIG. 14A

78

20

8b

8a

$W_{L(n)} = -0.3$

$W_{R(n)} = -0.3$

# FIG. 14B

FRONT

100

$V_{(n)}$

$V_{(n-1)}$

REAR

X

Z

# FIG. 15A

78

8b 8a

20

$W_{L(n)} = -0.3$    $W_{R(n)} = -0.3$

# FIG. 15B

$A_{Y(n)}$

FRONT

$A_{Y(n-1)}$

100

$V_{(n)}$

$V_{(n-1)}$

REAR

X

Z

# FIG. 16A

78

8b

8a

20

$W_{L(n)}=-0.3$          $W_{R(n)}'=0.3$

# FIG. 16B

$A_{Y(n-1)}$
$A_{Y(n)}$

FRONT

REAR

X

100

Z

# FIG. 17A

$W_{L(n)} = -0.1$          $W_{R(n)} = -0.3$

# FIG. 17B

# FIG. 18A

78

20

8b

8a

$W_{L(n)}{}' = 0.1$          $W_{R(n)} = -0.3$

# FIG. 18B

$A_{Y(n)}$

100

$A_{Y(n-1)}$

FRONT

$V_{(n)}$

REAR

X

$V_{(n-1)}$

Z

## INTERNATIONAL SEARCH REPORT

| | International application No. |
|---|---|
| | PCT/JP2010/053998 |

**A. CLASSIFICATION OF SUBJECT MATTER**
*A63F13/00*(2006.01)i, *A63F13/02*(2006.01)i, *G06F3/033*(2006.01)i

According to International Patent Classification (IPC) or to both national classification and IPC

**B. FIELDS SEARCHED**

Minimum documentation searched (classification system followed by classification symbols)
A63F13/00, A63F13/02, G06F3/033

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-264195 A (Nintendo Co., Ltd.),<br>06 November 2008 (06.11.2008),<br>paragraphs [0050] to [0068], [0274] to [0276];<br>fig. 1 to 4, 41<br>& US 2008/0261696 A1 | 1-3,6-8<br>4-5 |
| Y<br>A | JP 2003-240630 A (Newopto Corp.),<br>27 August 2003 (27.08.2003),<br>entire text; all drawings<br>(Family: none) | 1-3,6-8<br>4-5 |
| A | JP 2008-119345 A (Nintendo Co., Ltd.),<br>29 May 2008 (29.05.2008),<br>paragraphs [0071], [0083] to [0116];<br>fig. 9 to 13<br>& US 2008/0113798 A1 | 4-5 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02 June, 2010 (02.06.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008264195 A
- JP 2008119211 A